# EUROPEAN PATENT APPLICATION

(11) **EP 1 205 516 A1**
(43) Date of publication of application: **15.05.2002**
(21) Application number: 01309444.6
(22) Date of filing: 07.11.2001
(51) Int. Cl.: C08L 23/02, C08K 3/22

(54) **Polyolefin-based resin composition and process for production thereof**

(30) Priority: 10.11.2000 JP 2000342776
(71) Applicant: Dow Corning Toray Silicone Co., Ltd., Tokyo (JP)
(72) Inventor: Morita, Yoshitsugu, Dow Corning Toray Sil. Co Ltd., Ichihara-shi, Chiba Prefecture (JP); Nakanishi, Koji, Dow Corning Toray Sil. Co Ltd., Ichihara-shi, Chiba Prefecture (JP); Furukawa, Haruhiko, Dow Corning Toray Sil. Co Ltd., Ichihara-shi, Chiba Prefecture (JP); Shiromoto, Koji, Dow Corning Toray Sil. Co Ltd., Ichihara-shi, Chiba Prefecture (JP); Ueki, Hiroshi, Dow Corning Toray Sil. Co Ltd., Ichihara-shi, Chiba Prefecture (JP); Hatanaka, Hidekatsu Dow Corning Toray Sil. Co Ltd., Ichihara-shi, Chiba Prefecture (JP)
(74) Representative: Kyle, Diana

(57) **Abstract**

A polyolefin-based resin composition comprising (A) 100 parts by weight of a polyolefin-based resin, (B) 10 to 200 parts by weight of a metal hydroxide powder, (C) 0.01 to 50 parts by weight of a powdery material consisting of (i) a liquid organopolysiloxane having at least one silicon-bonded hydrogen atom per molecule and (ii) an inorganic powder other than a metal hydroxide, and (D) a platinum-based catalyst in an amount sufficient to provide 0.1 to 10,000 ppm of platinum metal based on the total weight of component (A) and component (B); and a process for the production thereof.

## Description

The present invention relates to a polyolefin-based resin composition and a process for the production thereof, and more specifically relates to a polyolefin-based resin composition of superior flame retardancy and to a process for its efficient production.

Japanese Unexamined Patent Application Publication No. Hei 03(1991)-054236 describes a flame retardant polyolefin-based resin composition comprising a polyolefin-based resin, magnesium hydroxide and/or aluminum hydroxide, and a silica powder containing silicone oil. This composition, however, did not possess sufficient flame retardancy.

As a result of in-depth investigations aimed at eliminating the above-mentioned problem, the authors of the present invention arrived at the present invention. Namely, it is an object of the present invention to provide a polyolefin-based resin composition of superior flame retardancy and a process for its efficient production.

A polyolefin-based resin composition comprising (A) 100 parts by weight of a polyolefin-based resin, (B) 10 to 200 parts by weight of a metal hydroxide powder, (C) 0.01 to 50 parts by weight of a powdery material consisting of (i) a liquid organopolysiloxane having at least one silicon-bonded hydrogen atom per molecule and (ii) an inorganic powder other than a metal hydroxide, and (D) a platinum-based catalyst in an amount sufficient to provide 0.1 to 10,000 ppm of platinum metal based on the total weight of component (A) and component (B); and a process for the production thereof.

The present invention is a polyolefin-based resin composition comprising (A) 100 parts by weight of a polyolefin-based resin, (B) 10 to 200 parts by weight of a metal hydroxide powder, (C) 0.01 to 50 parts by weight of a powdery material consisting of (i) a liquid organopolysiloxane having at least one silicon-bonded hydrogen atom per molecule and (ii) an inorganic powder other than a metal hydroxide, and (D) a platinum-based catalyst in an amount sufficient to provide 0.1 to 10,000 ppm of platinum metal based on the total weight of component (A) and component (B).

The present invention further comprises a process for the production of a polyolefin-based resin composition, the process comprising mixing under heating (A) 100 parts by weight of a polyolefin-based resin and (B) 10 to 200 parts by weight of a metal hydroxide powder, and then mixing therein (C) 0.01 to 50 parts by weight of a powdery material consisting of (i) a liquid organopolysiloxane having at least one silicon-bonded hydrogen atom per molecule and (ii) an inorganic powder other than a metal hydroxide and (D) a platinum-based catalyst in an amount sufficient to provide 0.1 to 10,000 ppm of platinum metal based on the total weight of component (A) and component (B).

First of all, detailed explanations are provided regarding the polyolefin-based resin composition of the present invention. The polyolefin-based resin composition of component (A) is, for example, a homopolymer of an olefin, or a copolymer of an olefin and another vinylic monomer and is specifically exemplified by high-density polyethylene, medium-density polyethylene, low-density polyethylene, and polypropylene; copolymers of ethylene or propylene with α-olefins having 3 to 12 carbon atoms, such as propylene, 1-butene, 1-pentene, 4-methyl-1-pentene, 1-octene, and 1-decene; copolymers of ethylene and vinylic monomers, such as vinyl acetate, ethyl acrylate, methacrylic acid, ethyl methacrylate, maleic acid, and maleic anhydride; polymers obtained by modifying copolymers of polyethylene or ethylene and α-olefins with acrylic acid, maleic acid, and other unsaturated carboxylic acids or their derivatives; and mixtures of two or more of the above-mentioned polymers. Although there are no limitations concerning the processes used for the production of these polyolefin-based resins, resins obtained by polymerization based on metallocene-type catalysts are preferable from the standpoint of their excellent compoundability with other components. Polyethylene-based resins are suitable because of the excellent mechanical characteristics of the polyolefin-based resin composition, and ethylene-vinyl acetate copolymers, ethylene-ethyl acrylate copolymers, or their mixtures are particularly suitable because of the considerable increase in the flame retardancy.

The metal hydroxide powder of component (B) is a component that imparts flame retardancy to the present composition. It is particularly preferable for component (B) to have a decomposition start temperature between 150°C and 450°C. Component (B) is exemplified by magnesium hydroxide powder, aluminum hydroxide powder, powders of their solid solutions, or mixed powders made therefrom. Preferably component (B) is magnesium hydroxide powder. In addition, the metal hydroxide powders of component (B) may be surface treated with, for example, silane coupling agents, titanium coupling agents, and higher fatty acids. Additionally, although there are no limitations regarding the average particle size of component (B), in order to obtain superior dispersibility in component (A) and avoid deterioration in the molding processability the average particle size should preferably be 0.01 to 30 µm, and especially preferably, 0.05 to 10 µm.

The content of component (B) is 10 to 200 parts by weight, preferably 30 to 150 parts by weight, per 100 parts by weight of component (A). This is due to the fact that when the content of component (B) is below the lower limit of the above-mentioned ranges, it tends to be difficult to impart sufficient flame retardancy to the resultant polyolefin-based resin composition. On the other hand, when the content of component (B) exceeds the upper limit of the above-mentioned ranges, the mechanical strength and molten-state flowability of the resultant polyolefin-based resin composition tends to decrease considerably.

The powdery material of component (C), in the same manner as the aforementioned component (B), is used to impart flame retardancy to the present composition. Component (C) is made up of component (i) and component (ii). Component (i) is a liquid organopolysiloxane having at least one silicon-bonded hydrogen atom per molecule. Although there are no limitations concerning the content of silicon-bonded hydrogen atoms in component (i), preferably it is at least 0.001 wt%, and especially preferably at least 0.005 wt%. This is due to the fact that when the content of silicon-bonded hydrogen atoms is less than the above-mentioned lower limits there may be a decrease in the flame retardancy of the polyolefin-based resin composition. In addition, although there are no limitations concerning the upper limit of the content of silicon-bonded hydrogen atoms in component (A), preferably it is not more than 1.5 wt%, and, especially preferably not more than 0.5 wt%. This is due to the fact that if the content of silicon-bonded hydrogen atoms exceeds the above-mentioned upper limits, there may be a decrease in the flame retardancy of the polyolefin-based resin composition. In addition, groups bonded to silicon atoms other than silicon-bonded hydrogen atoms in component (i) are exemplified by monovalent hydrocarbon groups such as methyl, ethyl, propyl, and other alkyl groups; vinyl, allyl, butenyl, and other alkenyl groups; and phenyl, tolyl, and other aryl groups. Although there are no limitations concerning the viscosity of component (i) at 25°C, preferably it is 1 to 100,000,000 mPa·s, more preferably, 1 to 1,000,000 mPa·s, and especially preferably 5 to 1,000,000 mPa·s. This is due to the fact that when the viscosity at 25°C is less than the lower limit of the above-mentioned ranges, the component may volatilize when mixed with component (ii) to produce the powdery material, and when it exceeds the upper limit of the above-mentioned ranges its compoundability with component (ii) tends to decrease.

There are no particular limitations concerning the molecular structure of component (i), which may be, for example, linear, branched, linear with partial branching, cyclic, and resin-like. Component (i) is exemplified by liquid organopolysiloxanes described by general formula: 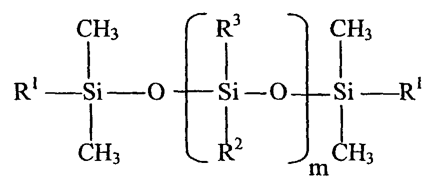 In the formula, R¹ is a monovalent hydrocarbon group or a hydrogen atom, R² is a monovalent hydrocarbon group or a hydrogen atom, with at least one of R¹ and R² in the formula being a hydrogen atom. The monovalent hydrocarbon groups represented by R¹ are exemplified by methyl, ethyl, propyl, and other alkyl groups; phenyl, tolyl, and other aryl groups; and vinyl, allyl, and other alkenyl groups. The monovalent hydrocarbon groups represented by R² are exemplified by the same groups as R¹. R³ is a monovalent hydrocarbon group exemplified by the same groups as R¹. Additionally, the subscript m in the above formula is an integer of at least 1.

Component (i) is exemplified by the following liquid organopolysiloxanes. Also, the subscript m in the formula is the same as described above, subscript n is an integer of at least 1, and subscript p is an integer of at least 1.

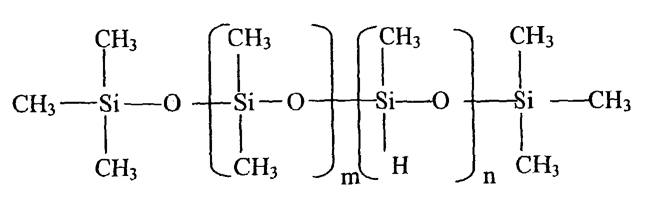

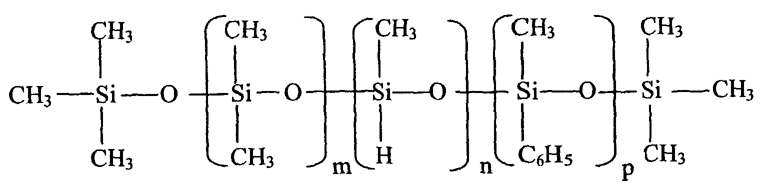

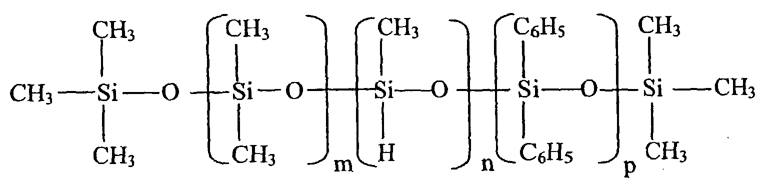

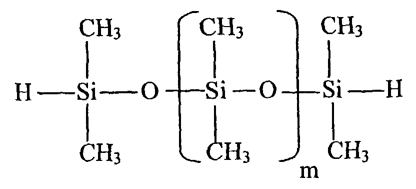

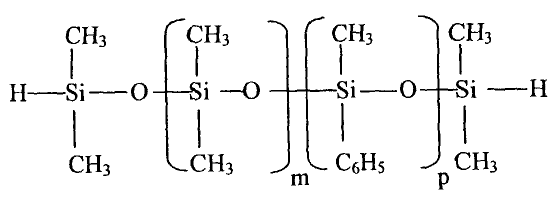

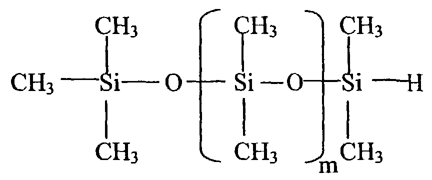

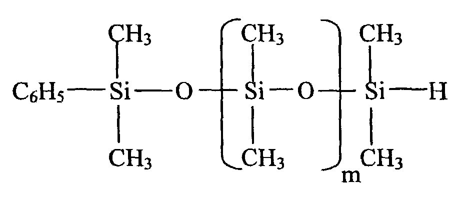

Component (ii) is an inorganic powder other than a metal hydroxide, with preferable examples including silica, alumina, magnesia, iron oxide, titania, zinc oxide, and other metal oxides; and in addition to the above, calcium hydroxide, calcium silicate, barium sulfate, talc, mica, clay, boron nitride, magnetite sand, glass beads, glass flakes, glass microballoons, diatomaceous earth, or powders of metals, with metal oxide powders being particularly preferable. Among these metal oxide powders, silica powders are preferable. The silica powders are exemplified by dry process silica (fumed silica) powder, wet process silica (precipitated silica) powder, fused silica powder, and crystalline silica powder. Although there are no limitations concerning the average particle size of component (ii), preferably the size is not more than 100 µm, and especially preferably not more than 10 µm. In particular, in the case of a silica powder its BET specific surface area is preferably at least 20 m²/g, more preferably at least 50 m²/g, and especially preferably at least 100 m²/g.

Although there are no limitations concerning the content of the aforementioned component (ii) in the powdery material of component (C), the content is preferably 50 to 250 parts by weight, more preferably 50 to 200 parts by weight, and especially preferably 75 to 150 parts by weight per 100 parts by weight of component (i). This is due to the fact that when the content of component (ii) is less than the lower limit of the above-mentioned ranges, it may become difficult to impart sufficient flame retardancy to the polyolefin-based resin composition, and when it exceeds the upper limit of the above-mentioned ranges it becomes difficult to produce a good powder for use as an additive for organic resin.

Component (C) is prepared by mixing and grinding into powder the aforementioned component (i) and the aforementioned component (ii). Methods used to mix the aforementioned (i) and the aforementioned component (ii) are exemplified, for instance, by a method in which component (ii) is subjected to agitation while component (i) is added to it. The agitator equipment is preferably a mixer capable of high-speed shear, for example a Henschel mixer or a Flowjet mixer. For excellent miscibility with component (A), the average particle size of the thus prepared powdery material is preferably 0.1 to 500 µm.

The content of component (C) in the present composition is 0.01 to 50 parts by weight, preferably 0.5 to 25 parts by weight, and especially preferably, 1 to 20 parts by weight per 100 parts by weight of component (A). This is due to the fact that when the content of component (C) is less than the lower limit of the above-mentioned ranges it may become difficult to impart sufficient flame retardancy to the resultant polyolefin-based resin composition, and when it exceeds the upper limit of the above-mentioned ranges the mechanical strength of the resultant polyolefin-based resin composition may drop.

The platinum-based catalyst of component (D) is exemplified by platinum micropowder, chloroplatinic acid, alcohol-modified chloroplatinic acid, platinum diketone complex, platinum olefin complex, complex of chloroplatinic acid or platinum and dialkenyl oligosiloxane, as well as materials obtained by using alumina, silica, carbon black, etc. as powdery carriers for platinum micropowder. Preferable among the above are complexes of chloroplatinic acid or platinum and dialkenyl oligosiloxanes, in particular the complex of chloroplatinic acid and 1,3-divinyltetramethyldisiloxane as disclosed in Examined Patent Application Publication No. Sho 42(1967)-022924, the complexes of chloroplatinic acid and 1,3-divinyltetramethyldisiloxane disclosed in Examined Patent Application Publication No. Sho 46(1971)-028795, as well as in Examined Patent Application Publication No. Sho 46(1971)-029731 and Examined Patent Application Publication No. Sho 47(1972)-023679, and the complex of platinum and 1,3-divinyltetramethyldisiloxane. It is preferable to use such platinum complexes by diluting them with liquid methylvinylpolysiloxane.

The content of component (D) in the present composition is that sufficient to provide 0.1 to 10,000 ppm, preferably 1 to 5,000 ppm, and especially preferably 5 to 1,000 ppm of platinum metal, based on the total weight of component (A) and component (B). This is due to the fact that when the content of component (D) is less than the lower limit of the above-mentioned ranges, it may become impossible to impart sufficient flame retardancy to the resultant polyolefin-based resin composition, and when it exceeds the above-mentioned range the electric insulating properties of the resultant polyolefin-based resin composition may decrease and its external appearance may be flawed.

If desired, calcium carbonate, talc, clay, mica, silica, and other inorganic fillers; and, in addition to the above, anti-oxidants, lubricating agents, organic pigments, inorganic pigments, colorants, UV absorbers, heat stabilizers, photo-stabilizers, dispersing agents, fungicidal agents, anti-static agents, etc. may be introduced in the polyolefin-based resin composition of the present invention.

Next, explanations are provided regarding the process for the production of the polyolefin-based resin composition of the present invention. The process of the present invention comprises mixing component (A) and component (B) under heating and then mixing therein component (C) and component (D). In addition, optional components can be added in the process of the present invention during the mixing of component (A) and component (B) or during the mixing therein of component (C) and component (D).

The temperature used in the present process should be at least the melting temperature of (A). For example when component (A) is an amorphous polyolefin-based resin, preferably the temperature should be about 100°C higher than its glass transition point and lower than its decomposition temperature. When component (A) is a crystalline polyolefin-based resin, preferably the temperature should be about 30°C higher than its melting point and lower than its decomposition temperature. The time of kneading at the above temperature varies depending on the type of equipment and operating conditions. For example, when using continuous mixing equipment approximately 1 to 5 minutes is sufficient.

The equipment used for mixing under heating in the present process is exemplified by Banbury mixers, kneader-mixers, heated 2-roll mills, and other batch-type or single screw extruders; twin screw extruders, and other continuous mixing equipment. The use of continuous mixing equipment such as extruders is preferable and the use of twin screw extruders is particularly preferable due to the high kneading efficiency and operating characteristics.

### Application Examples

Application examples of the polyolefin-based resin composition of the present invention are explained in detail hereinbelow. The liquid organopolysiloxanes used in Reference Examples 1 to 5 are listed in Table 1. In the formulae, "Me" stands for methyl. In the table, "SiH%" designates the content of silicon-bonded hydrogen atoms and "viscosity" is a value measured at 25°C.

**Table 1**

| Type | Formula | SiH% (wt%) | Viscosity (mPa·s) |
|---|---|---|---|
| A1 | HMe₂SiO (Me₂SiO) ₆₀SiMe₂H | 0.044 | 60 |
| A 2 | Me₃SiO (Me₂SiO) ₅₄₀(MeHSiO) ₁₀SiMe₃ | 0.025 | 3,200 |
| A 3 | HMe₂SiO(Me₂SiO) ₁₇₀₀SiMe₂H | 0.002 | 1,000,000 |
| A 4 | HMe₂SiO(MeHSiO) ₅₀SiMe₂H | 1.67 | 19 |
| A 5 | Me₃SiO (Me₂SiO) ₅₀₀SiMe₃ | 0 | 2,700 |

### Reference Examples 1 to 5.

To prepare powdery materials (D1 to D5), 1 kg of amorphous dry process silica powder (density of silanol groups on the surface = 4.2 groups/100 Å², average particle size = 20 µm, BET specific surface area = 200 m²/g) and 1 kg of any of the liquid organopolysiloxanes A1 to A5 listed in Table 1 were charged to a 20-L Henschel mixer and subjected to agitation at 1350 rpm for about 10 minutes. The 200-mesh pass-through% of the powdery materials was obtained by passing 9 g of the material through a sieve (200-mesh). The characteristics of the powdery materials are listed in Table 2.

**Table 2**

| | Reference Example 1 | Reference Example 2 | Reference Example 3 | Reference Example 4 | Reference Example 5 |
|---|---|---|---|---|---|
| Powdery materials | D1 | D2 | D3 | D4 | D5 |
| Liquid organopolysiloxanes | A1 | A2 | A3 | A4 | A5 |
| 200-mesh pass-through% (wt%) | 51 | 85 | 83 | 28 | 81 |

### Application Examples 1 to 2 and Comparative Example 1 to 4.

An ethylene-ethyl acrylate copolymer resin (EEA: Jalex A 1150 from Nippon Polyolefin Co., Ltd.) was heated to 220°C and melted in a Labo Plastomill manufactured by Toyo Seiki Seisaku-Sho, Ltd., after which a magnesium hydroxide powder with an average particle size of 0.8 µm (Kisuma 5A from Kyowa Chemical Industry Co., Ltd.) was combined therewith and kneaded until it was homogeneously dispersed therein. Next, after adding powdery material D1 prepared in Reference Example 1 and adding a vinyl-terminated polydimethylsiloxane solution of a platinum-1,3-divinyltetramethyldisiloxane complex (platinum concentration = 0.5 wt%), mixing was carried out at 220°C for 5 minutes, yielding a polyolefin-based resin composition. The amounts of each component (in parts by weight) are as shown in Table 3. The polyolefin-based resin composition was used for injection molding at a molding temperature of 220°C. The oxygen index of the moldings was determined by the method described in JIS K 7201 (Burning behavior test for plastics using oxygen index). The results are shown in Table 3.

**Table 3**

| | Application Example 1 | Application Example 2 | Comparative Example 1 | Comparative Example 2 | Comparative Example 3 | Comparative Example 4 |
|---|---|---|---|---|---|---|
| EEA | 100 | 100 | 100 | 100 | 100 | 100 |
| Magnesium hydroxide | 50 | 100 | 50 | 100 | 100 | 100 |
| Powdery material (D1) | 5 | 10 | 0 | 0 | 10 | 0 |
| Platinum catalyst solution | 0.4 | 0.4 | 0 | 0 | 0 | 0.4 |
| Oxygenindex | 32 | 42 | 25 | 27 | 35 | 26 |

### Application Examples 3 to 7 and Comparative Example 5.

An ethylene-ethyl acrylate copolymer resin (EEA: Jalex A 1150 from Nippon Polyolefin Co., Ltd.) and/or high-density polyethylene (HDPE: Hizex 5305E from Mitsui Chemicals, Inc.) were/was heated to 220°C and melted in a Labo Plastomill manufactured by Toyo Seiki Seisaku-Sho, Ltd., after which a magnesium hydroxide powder with an average particle size of 0.8 µm (Kisuma 5A from Kyowa Chemical Industry Co., Ltd.) was combined therewith and kneaded until it was homogeneously dispersed therein. Next, after adding powdery materials D2 to D5 prepared in Reference Examples 2 to 5 and adding a vinyl-terminated polydimethylsiloxane solution of a platinum-1,3-divinyltetramethyldisiloxane complex (platinum concentration = 0.5 wt%), mixing was carried out at 220°C for 5 minutes, yielding a polyolefin-based resin composition. The amounts of each component (in parts by weight) are as shown in Table 4. Next, the polyolefin-based resin composition was used for injection molding at a molding temperature of 220°C. The oxygen index of the moldings was determined by the method described in JIS K 7201 (Burning behavior test for plastics using oxygen index). The results are shown in Table 4.

**Table 4**

| | Application Example 3 | Application Example 4 | Application Example 5 | Application Example 6 | Application Example 7 | Comparative Example 5 |
|---|---|---|---|---|---|---|
| EEA | 100 | 100 | 100 | 100 | 0 | 100 |
| HDPE | 0 | 0 | 0 | 0 | 100 | 0 |
| Magnesium hydroxide | 100 | 100 | 100 | 120 | 100 | 100 |
| Powdery materials | | | | | | |
| D2 | 10 | 0 | 0 | 0 | 0 | 0 |
| D3 | 0 | 10 | 0 | 0 | 0 | 0 |
| D4 | 0 | 0 | 10 | 10 | 10 | 0 |
| D5 | 0 | 0 | 0 | 0 | 0 | 10 |
| Platinum catalyst solution | 0.4 | 0.4 | 0.4 | 0.4 | 0.4 | 0.4 |
| Oxygen index | 39 | 42 | 42 | 44 | 38 | 35 |

## Claims

1. A polyolefin-based resin composition comprising (A) 100 parts by weight of a polyolefin-based resin, (B) 10 to 200 parts by weight of a metal hydroxide powder, (C) 0.01 to 50 parts by weight of a powdery material consisting of (i) a liquid organopolysiloxane having at least one silicon-bonded hydrogen atom per molecule and (ii) an inorganic powder other than a metal hydroxide, and (D) a platinum-based catalyst in an amount sufficient to provide 0.1 to 10,000 ppm of platinum metal based on the total weight of component (A) and component (B).

2. The polyolefin-based resin composition according to claim 1, comprising 30 to 150 parts by weight of component (B) per 100 part by weight of component (A).

3. The polyolefin-based resin composition according to claim 1 or 2, comprising 1 to 20 parts by weight of component (C) per 100 parts by weight of component (A).

4. The polyolefin-based resin composition according to any of claims 1 to 3, wherein component (B) is a magnesium hydroxide powder.

5. The polyolefin-based resin composition according to any of claims 1 to 4, wherein component (i) contains at least 0.001 wt% of silicon-bonded hydrogen atoms.

6. The polyolefin-based resin composition according to claim 5, wherein component (i) contains 0.005 to 0.5 wt% silicon-bonded hydrogen atoms.

7. The polyolefin-based resin composition according to any of claims 1 to 6, wherein the viscosity at 25°C of component (i) is 1 to 100,000,000 mPa·s.

8. The polyolefin-based resin composition according to claim 7, wherein component (i) has a viscosity at 25°C of 5 to 1,000,000 mP s.

9. The polyolefin-based resin composition according to any of claims 1 to 8, wherein component (ii) is a metal oxide powder.

10. The polyolefin-based resin composition according to any of claims 1 to 8, wherein component (ii) is a silica powder.

11. The polyolefin-based resin composition according to claim 10, wherein component (ii) is a silica powder having a BET specific surface area of at least 100 m²/g.

12. The polyolefin-based resin composition according to any of claims 1 to 11, wherein component (C) has as average particle size of 0.1 to 500 µm.

13. A process for preparation of a polyolefin-based resin composition comprising mixing under heating (A) 100 parts by weight of a polyolefin-based resin and (B) 10 to 200 parts by weight of a metal hydroxide powder, and then mixing therein (C) 0.01 to 50 parts by weight of a powdery material consisting of (i) a liquid organopolysiloxane having at least one silicon-bonded hydrogen atom per molecule and (ii) an inorganic powder other than a metal hydroxide and (D) a platinum-based catalyst in an amount sufficient to provide 0.1 to 10,000 ppm of platinum metal based on the total weight of component (A) and component (B).

14. The process for preparation of a polyolefin-based resin composition according to claim 13, wherein the components are as defined in any of claims 2 to 12.
